# EUROPEAN PATENT APPLICATION

(11) **EP 1 445 010 A1**
(43) Date of publication of application: **11.08.2004**
(21) Application number: 03250732.9
(22) Date of filing: 05.02.2003
(51) Int. Cl.: B01D 19/00, B01L 3/02, B01L 11/00

(54) **Degassification of fluids**

(71) Applicant: The Automation Partnership (Cambridge) Limited, Royston, Hertfordshire SG8 5WY (GB)
(72) Inventor: Bargh, Adrian Neil, London., N8 7LS (GB)
(74) Representative: Brunner, Michael John

(57) **Abstract**

A pair of coaxial tubes (12,12', 13, 13') are provided for dispensing liquid (19). The inner tube (12, 12') is at least partially gas permeable and fluid flows through it, in use. The outer tube (13, 13') surrounds the inner tube (12, 12') and is radially spaced therefrom. A sealed volume is formed between the two tubes (12, 12', 13, 13').

## Description

This invention relates to liquid delivery systems and, in particular, to the delivery of relatively small volumes of liquid.

Liquid delivery systems are well known in the art and delivery systems have been designed to deliver small volumes of liquid such as reagents for use in chemical or biological analysis. As biological and chemical analysis becomes increasingly automated it is important to be able to rapidly and accurately dispense very small quantities of liquid as droplets. WO-A-97/16251 discloses such a system that comprises a pipetting needle which is fed with liquid, via a tube, from a syringe having a piston and piston drive, together with an impulse generator arranged to act on liquid in the tube to cause it to be dispensed from the pipetting needle when an impact is applied to the tube.

A further example of a dispensing system is disclosed in US-A-6063339. In contrast with the systems previously discussed for the delivery of small volumes of reagents for chemical or biological analysis this system relates to dispensing ink in a printer. Here the emphasis is on the speed of delivery for dispensing inks onto paper for printing a graphic bit map file. The system includes a pump driver which is controlled by a controller that oversees the operation of the pump and also a spatial table for the dispensing head and the dispensing head itself.

Whether the liquid dispensed is ink for printing or reagents for biological or chemical analysis the precise volume of liquid dispensed must be accurately known. However, if gas is dissolved in the liquid, this can make the volume metering unreliable and reduce the uniformity of delivery within the system.

The problems caused by gases that become dissolved in liquids are well known in the art. There are many systems available for removing gases from liquids by varying means. It is known in the art to cause gas to move from a liquid by setting up a pressure differential between the volume containing the liquid and a second volume into which the gas can move. US-A-5772736 shows one example of such a system.

However, these systems do not address the problem of subsequent ingress of gases into the liquid as the liquid moves along narrow conduits that link the various components in a system. Many materials from which tubes are formed are porous and allow gas seepage through the walls of the tubes carrying the liquid so that, even in a system containing a dedicated degassing module, gas seepage into the liquid may result in the liquid still containing an unacceptably high concentration of gases when it is dispensed.

It is common, in liquid dispensing apparatus for delivery systems to deliver small volumes of liquid such as reagents for use in chemical or biological analysis that the pump that causes the liquid to move from the reservoir to the pipetting needle is located above the point at which dispensing occurs. There is therefore a negative pressure in the tube that holds the liquid when the pump is not in use. This encourages the ingress of gas through the tube walls and into the liquid, either as trapped bubbles or fully dissolved into the liquid. Theoretically it would be possible to overcome this problem by having the pump and the pipetting needle at the same height and the tubing to be horizontal as this would prevent the negative pressure in the tubes facilitating the ingress of gas. However, this is not practically possible in many systems. The system of the present invention aims to overcome some of the problems associated with gases that become dissolved in liquids or trapped in the form of bubbles.

According to the present invention there is provided a pair of coaxial tubes for dispensing liquid comprising:
an inner tube that is at least partially gas permeable through which fluid flows, in use, and
an outer tube surrounding the inner tube, radially spaced therefrom and forming a sealed volume between the two tubes.

Furthermore, according to the present invention there is provided a system for dispensing a liquid, the system comprising: a pair of coaxial tubes and
a pressure reducing device for maintaining the pressure in the space between the tubes at less than atmospheric pressure in use. The pressure reducing device may be a vacuum pump.

The system may further comprise a pump for moving liquid in use along the inner tube from a liquid supply container to a dispensing means situated at the other end of the coaxial tubes from the liquid supply container. This pump may be a syringe pump.

The volume between the inner and outer tubes is sealed. The seal may be formed by an O-ring; a rectangular cross-section piping section; a silicon filer or crimping procedure.

Furthermore, according to the present invention there is provided a method of minimising the gas content of a liquid using a pair of coaxial tubes, wherein liquid is pumped through the inner of said coaxial tubes and the volume between the coaxial tubes is maintained at low pressure.

An example of the present invention will now be described with reference to the accompanying drawing in which:

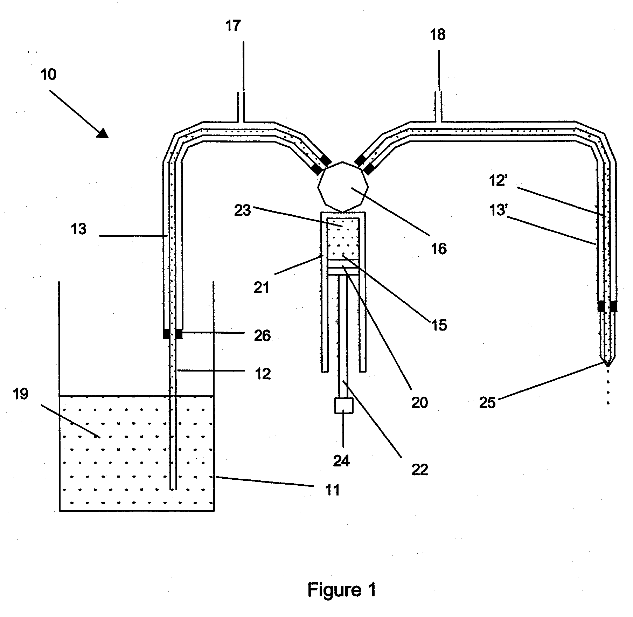

Figure 1 shows a system according to the present invention.

Figure 1 shows a system 10 for dispensing a liquid 19 drawn from a liquid supply container 11 by a syringe pump 15 and passed through a three port valve 16 to a pipetting nozzle 25. Two sets of coaxial tubes 12, 13, 12', 13' are provided between the reservoir 11 and the three port valve 16, and between the three port valve and the nozzle 25. The liquid 19 is drawn from the liquid supply container 11 into the inner tube 12 which is made from PTFE or similar and is surrounded by an outer tube 13. The outer tube 13 is sealed to create an enclosure, that is connected to a vacuum pump (not shown) through a port 17 on the supply side of the three port valve 16 and syringe pump 15. The outer tube 13' is sealed to create a similar enclosure and connected to a vacuum pump by a similar port 18 on the dispensing side of the three port valve 16 and syringe pump15. Both the inner tube 12, 12' and the outer tube 13, 13' are sufficiently rigid to maintain the void between them without additional supporting structures but are flexible over their length. The inner and outer tubes 12, 12', 13, 13' are spaced from one another at the ends by the provision of an O-ring 26 that forms a seal between the two tubes 12, 13.

The syringe pump 15 has a cylinder 21 and a piston 20 which together provide a volume 23 of liquid 19 from the liquid container 11. The three port valve 16 can open the volume 23 to either section of the tubes. The piston 20 has a piston rod 22 which extends to a syringe drive (not shown) which movement of the piston rod head 24 at the opposite end of the piston rod 22 to the piston 20 and by so doing, when the three port valve 16 is open to the section of the coaxial tube that leads to the dispensing head, causes the expulsion of liquid from the pipetting nozzle 25.

The syringe pump 15 is connected to the coaxial tubes 12, 13 by a compression fitting between the inner tube 12 and the three port valve 16.

In use, the vacuum pump causes the pressure in the outer tube 13 to fall to below atmospheric pressure. The minimum change in pressure that is required is governed by the vertical height of the pump above the dispensing point. It is of the order of 0.6 x 10⁴Pa below atmospheric pressure. The pressure could be reduced by much more than 0.6 x 10⁴Pa if required. As a result of the pressure differential across the gas permeable membrane that forms the inner tube 12, gas is prevented from entering through the inner tube 12, 12'; any bubbles of free gas will be drawn out of tube 12, 12' and any gas dissolved in the liquid 19 will come out of solution and move across the membrane 12 into the outer tube 13.

## Claims

1. A pair of coaxial tubes (12,12', 13, 13') for dispensing liquid (19) comprising:
an inner tube (12, 12') that is at least partially gas permeable through which fluid flows, in use, and
an outer tube (13, 13') surrounding the inner tube (12, 12'), radially spaced therefrom and forming a sealed volume between the two tubes (12, 12', 13, 13').

2. A system (10) for dispensing a liquid (19), the system (10) comprising:
a pair of coaxial tubes (12, 12', 13, 13') according to claim 1, and
a pressure reducing device for maintaining the pressure in the space between the tubes at less than atmospheric pressure in use.

3. The system (10) according to claim 2, further comprising:
a pump (15) for moving liquid (19) in use along the inner tube from a liquid supply container (11) to a dispensing means (25) situated at the other end of the coaxial tubes (12, 12', 13, 13') from the liquid supply container (11).

4. The system (10) according to claim 3, wherein the pump (15) is a syringe pump.

5. The system (10) according to any of claims 2 to 4, wherein the pressure reducing device is a vacuum pump.

6. The system according to any of the preceding claims, wherein an O-ring (26) is used to seal the volume between the inner and outer tubes (12, 12', 13, 13').

7. The system according to any of the preceding claims, wherein a portion of pipe with rectangular cross-section is used to seal the volume between the inner and outer tubes (12, 12', 13, 13')

8. The system (10) according to claim 3, wherein the dispensing means (25) is a pipetting nozzle.

9. A method of minimising the gas content of a liquid (19) using a pair of coaxial tubes (12, 12', 13, 13') according to claim 1, wherein liquid (19) flows through the inner of said coaxial tubes (12, 12') and the volume between the coaxial tubes (12, 12', 13, 13') is maintained at low pressure.
